# EUROPEAN PATENT APPLICATION

(11) **EP 4 793 321 A1**
(43) Date of publication of application: **19.08.2026**
(21) Application number: 24876142.1
(22) Date of filing: 09.07.2024
(51) Int. Cl.: C08L 83/07, G02B 1/04, C08L 83/05, C08K 7/26

(54) **SILICONE MATERIAL AND PREPARATION METHOD THEREFOR, LENS AND MANUFACTURING METHOD THEREFOR, LIGHT SOURCE, BACKLIGHT MODULE**

(30) Priority: 12.10.2023 CN 202311326875
(71) Applicant: Shenzhen TCL New Technology Co., Ltd., Shenzhen, Guangdong 518052 (CN)
(72) Inventor: GAO, Xiping, Shenzhen, Guangdong 518052 (CN); ZENG, Hang, Shenzhen, Guangdong 518052 (CN); ZHANG, Li, Shenzhen, Guangdong 518052 (CN)
(74) Representative: Herrero & Asociados, S.L.
(86) International application number: PCT/CN2024/104407
(87) International publication number: WO 2025/077321

(57) **Abstract**

A silicone material and a preparation method therefor, a lens and a manufacturing method therefor, a light source, and a backlight module. The silicone material includes a component A and a component B; the component A includes a high-viscosity vinyl silicone resin, a low-viscosity vinyl silicone resin, a vinyl silicone oil, a filler, and a catalyst; and the component B includes a high-viscosity vinyl silicone resin, a low-viscosity vinyl silicone resin, a phenyl vinyl silicone oil, a hydrogen-containing silicone oil, a filler, and an inhibitor.

## Description

This present application claims priority of the Chinese patent application with the Chinese Patent Application No. 202311326875.6, filed in the China National Intellectual Property Administration on October 12, 2023, and entitled "SILICONE MATERIAL AND PREPARATION METHOD THEREFOR, LENS AND MANUFACTURING METHOD THEREFOR, LIGHT SOURCE, BACKLIGHT MODULE", which is incorporated herein by reference in its entirety.

### TECHNICAL FIELD

The present application relates to the field of materials, and in particular, to a silicone material and a preparation method therefor, a lens and a manufacturing method therefor, a light source, and a backlight module.

### BACKGROUND

Liquid Crystal Displays (LCDs) have been applied in various aspects of production and life due to their many superior characteristics, such as high space utilization efficiency, low power consumption, no radiation, and low electromagnetic interference. An LCD is typically a backlit LCD, which includes a liquid crystal panel and a backlight module disposed opposite to each other.

The light source in the backlight module typically includes an LED device and a lens disposed around the LED device. The lens may enhance the efficiency of light use, and different lenses may be used to change the light field distribution of the LED device according to different needs.

### TECHNICAL PROBLEMS

To further improve performance parameters such as contrast and brightness of LCD-TVs, various television manufacturers are actively promoting Mini-LED television backlight module solutions. The lens solution for Mini-LED televisions typically uses a silicone material prepared through an injection molding process. The injection molding process usually includes four stages: filling, pressure holding, curing, cooling, and demolding. However, backlight module solution of the Mini-LED television requires the lens to have a small size and a thin thickness. Consequently, during the demolding stage of the lens production process, the problem of the lens being torn and damaged often occurs, resulting in a low production yield of the lens.

### TECHNICAL SOLUTIONS

Embodiments of the present application provide a silicone material and a preparation method therefor, a lens and a manufacturing method therefor, a light source, and a backlight module, which may improve the demolding yield of the lens, thereby improving the production yield of the lens.

In a first aspect, an embodiment of the present application provides a silicone material including a component A and a component B;
the component A includes 10-50 parts by weight of a high-viscosity vinyl silicone resin, 30-70 parts by weight of a low-viscosity vinyl silicone resin, 5-15 parts by weight of a vinyl silicone oil, 5-15 parts by weight of a filler, and 1-5 parts by weight of a catalyst;
the component B includes 10-50 parts by weight of a high-viscosity vinyl silicone resin, 30-70 parts by weight of a low-viscosity vinyl silicone resin, 5-15 parts by weight of a phenyl vinyl silicone oil, 5-15 parts by weight of a hydrogen-containing silicone oil, 5-15 parts by weight of a filler, and 0.02-0.2 parts by weight of an inhibitor;
a viscosity of the high-viscosity vinyl silicone resin ranges from 12000 mPa·s to 120000 mPa·s, and a viscosity of the low-viscosity vinyl silicone resin ranges from 300 mPa·s to 5000 mPa·s.

In a second aspect, an embodiment of the present application provides a method for preparing a silicone material, including:
adding10-50 parts by weight of a high-viscosity vinyl silicone resin, 30-70 parts by weight of a low-viscosity vinyl silicone resin, 5-15 parts by weight of a vinyl silicone oil, 5-15 parts by weight of a filler, and 1-5 parts by weight of a catalyst to a kneader; and mixing in a vacuum environment at a temperature of 25°C to 35°C to obtain a component A;
adding 10-50 parts by weight of a high-viscosity vinyl silicone resin, 30-70 parts by weight of a low-viscosity vinyl silicone resin, 5-15 parts by weight of a phenyl vinyl silicone oil, 5-15 parts by weight of a hydrogen-containing silicone oil, 5-15 parts by weight of a filler, and 0.02-0.2 parts by weight of an inhibitor to a kneader; and mixing in a vacuum environment at a temperature of 25°C to 35°C to obtain a component B; and the component A and the component B are stored separately.

In a third aspect, an embodiment of the present application provides a lens, the lens is made of a silicone material, and the silicone material is the silicone material as described above or a silicone material prepared by the preparation method as described above.

In a fourth aspect, an embodiment of the present application provides a method for manufacturing a lens, including:
providing a silicone material, and the silicone material is the silicone material as described above or a silicone material prepared by the preparation method as described above;
mixing the component A and the component B in the silicone material at a mass ratio of (1-3):(1-3) to obtain a mixture, and injecting the mixture into an injection molding apparatus and processing the mixture to obtain a lens.

In a fifth aspect, an embodiment of the present application provides a light source, including:
a substrate;
a light-emitting device, connected to the substrate;
a lens, and the lens is disposed peripherally of the light-emitting device and connected to the substrate, and the lens is the lens as described above or a lens made by the manufacturing method as described above.

In a sixth aspect, an embodiment of the present application provides a backlight module including the light source as described above.

### BENEFICIAL EFFECTS

The silicone material provided by embodiments of the present application includes the component A and the component B, and both the component A and the component B contain a high-viscosity vinyl silicone resin and a low-viscosity vinyl silicone resin. By compounding the high-viscosity vinyl silicone resin and the low-viscosity vinyl silicone resin, the silicone material has a strong tear resistance after cross-linking. When the silicone material is used to make a lens through an injection molding process, the demolding yield of the lens may be improved, thereby improving the production yield of the lens. By adding a filler to both the component A and the component B, the hardness of the silicone material may be increased, the shrinkage rate of the silicone material during the lens molding process may be reduced, and the stability of the molded dimensions of the lens may be ensured, thereby ensuring the stability of the optical effect of the lens. In the present application, by adjusting the ratio of the phenyl vinyl silicone oil to the filler, the refractive index of the lens may be increased while ensuring the light transmittance of the lens, thereby improving the light diffusion performance of the lens.

### BRIEF DESCRIPTION OF DRAWINGS

FIG. 1 is a flowchart of a method for preparing a silicone material according to an embodiment of the present application.
FIG. 2 is a flowchart of a method for manufacturing a lens according to an embodiment of the present application.
FIG. 3 is a schematic structural diagram of a light source according to an embodiment of the present application.

### EMBODIMENTS OF THE PRESENT APPLICATION

The technical solutions in the embodiments of the present application will be clearly and completely described below with reference to the accompanying drawings in the embodiments of the present application. Apparently, the described embodiments are merely some but not all of the embodiments of the present application. Based on the embodiments in the present application, all other embodiments obtained by a person of ordinary skill in the art without creative efforts shall fall within the protection scope of the present application.

An embodiment of the present application provides a silicone material including a component A and a component B;
the component A includes 10-50 parts by weight of a high-viscosity vinyl silicone resin, 30-70 parts by weight of a low-viscosity vinyl silicone resin, 5-15 parts by weight of a vinyl silicone oil, 5-15 parts by weight of a filler, and 1-5 parts by weight of a catalyst;
the component B includes 10-50 parts by weight of a high-viscosity vinyl silicone resin, 30-70 parts by weight of a low-viscosity vinyl silicone resin, 5-15 parts by weight of a phenyl vinyl silicone oil, 5-15 parts by weight of a hydrogen-containing silicone oil, 5-15 parts by weight of a filler, and 0.02-0.2 parts by weight of an inhibitor.

It should be noted that in the silicone material provided by embodiments of the present application, the component A and the component B are stored separately and are not mixed. This is because if the component A and the component B are mixed in advance, the liquid silicone material will polymerize prematurely, which may easily lead to defective products when the silicone material is subsequently used to make a lens.

When the silicone material of embodiments of the present application is used to make a lens, the component A and the component B are first mixed, and the resulting mixture is directly injected into an injection molding apparatus and processed to form the lens.

Exemplarily, a viscosity of the high-viscosity vinyl silicone resin ranges from 12000 mPa·s to 120000 mPa·s, for example, 12000 mPa·s, 20000 mPa·s, 40000 mPa·s, 60000 mPa·s, 80000 mPa·s, 100000 mPa·s, or 120000 mPa·s, etc.

Exemplarily, a viscosity of the low-viscosity vinyl silicone resin ranges from 300 mPa·s to 5000 mPa·s, for example, 300 mPa·s, 500 mPa·s, 1000 mPa·s, 2000 mPa·s, 3000 mPa·s, 4000 mPa·s, or 5000 mPa·s, etc.

The silicone material provided by embodiments of the present application includes the component A and the component B, and both the component A and the component B contain a high-viscosity vinyl silicone resin and a low-viscosity vinyl silicone resin. By compounding the high-viscosity vinyl silicone resin and the low-viscosity vinyl silicone resin, the silicone material has a strong tear resistance after cross-linking. When the silicone material is used to make a lens through an injection molding process, the demolding yield of the lens may be improved, thereby improving the production yield of the lens. By adding a filler to both the component A and the component B, the hardness of the silicone material may be increased, the shrinkage rate of the silicone material during the lens molding process may be reduced, and the stability of the molded dimensions of the lens may be ensured, thereby ensuring the stability of the optical effect of the lens. In the present application, by adjusting the ratio of the phenyl vinyl silicone oil to the filler, a refractive index of the lens may be increased while ensuring the light transmittance of the lens, thereby improving the light diffusion performance of the lens.

Exemplarily, the high-viscosity vinyl silicone resin and the low-viscosity vinyl silicone resin are both a methyl vinyl MQ silicone resin.

Exemplarily, a vinyl content of the high-viscosity vinyl silicone resin ranges from 0.5 wt% to 2.0 wt%, for example, 0.5 wt%, 0.8 wt%, 1 wt%, 1.2 wt%, 1.5 wt%, 1.8 wt%, or 2.0 wt%, etc.

Exemplarily, a vinyl content of the low-viscosity vinyl silicone resin ranges from 0.5 wt% to 2.0 wt%, for example, 0.5 wt%, 0.8 wt%, 1 wt%, 1.2 wt%, 1.5 wt%, 1.8 wt%, or 2.0 wt%, etc.

Exemplarily, the vinyl silicone oil is a linear polysiloxane terminated with (CH₃)₂(CH₂=CH)SiO_{1/2}.

Exemplarily, a vinyl content of the vinyl silicone oil ranges from 0.5 wt% to 2.0 wt%, for example, 0.5 wt%, 0.8 wt%, 1 wt%, 1.2 wt%, 1.5 wt%, 1.8 wt%, or 2.0 wt%, etc.

Exemplarily, a viscosity of the vinyl silicone oil ranges from 8000 mPa·s to 20000 mPa·s, for example, 8000 mPa·s, 10000 mPa·s, 12000 mPa·s, 15000 mPa·s, 18000 mPa·s, or 20000 mPa·s, etc.

Exemplarily, the phenyl vinyl silicone oil is a vinyl-terminated methyl phenyl silicone oil.

Exemplarily, a viscosity of the phenyl vinyl silicone oil ranges from 100 mPa·s to 5000 mPa·s, for example, 100 mPa·s, 200 mPa·s, 300 mPa·s, 400 mPa·s, or 500 mPa·s, etc.

Exemplarily, a vinyl content of the phenyl vinyl silicone oil ranges from 0.3 wt% to 2.0 wt%, for example, 0.3 wt%, 0.5 wt%, 0.8 wt%, 1 wt%, 1.2 wt%, 1.5 wt%, 1.8 wt%, or 2.0 wt%, etc.

Exemplarily, a refractive index of the phenyl vinyl silicone oil ranges from 1.45 to 1.55, for example, 1.45, 1.48, 1.5, 1.53, or 1.55, etc.

In some embodiments, the viscosity of the phenyl vinyl silicone oil ranges from 2000 mPa·s to 5000 mPa·s, for example, 2000 mPa·s, 3000 mPa·s, 4000 mPa·s, or 5000 mPa·s, etc.

In some embodiments, the refractive index of the phenyl vinyl silicone oil ranges from 1.48 to 1.54, for example, 1.48, 1.5, 1.52, or 1.54, etc.

Exemplarily, the hydrogen-containing silicone oil is a polysiloxane with a terminal and side hydrogen structure, and a hydrogen content of the polysiloxane with a terminal and side hydrogen structure ranges from 0.25 wt% to 1.3 wt%, for example, 0.25 wt%, 0.5 wt%, 0.8 wt%, 1 wt%, or 1.3 wt%, etc.

Exemplarily, the filler is fumed silica. Fumed silica, also known as fumed silicon dioxide, is amorphous nanoscale particles with surface hydroxyl groups and adsorbed water, generated by high-temperature hydrolysis of silicon halides in a hydrogen-oxygen flame. It is a white flocculent powder under normal conditions and is a non-toxic, odorless, and non-polluting non-metallic oxide. Exemplarily, a particle size D50 of the fumed silica ranges from5 nm to 500 nm, for example, 5 nm, 10 nm, 50 nm, 100 nm, 200 nm, 300 nm, 400 nm, or 500 nm,etc.

Exemplarily, a specific surface area of the fumed silica ranges from 150 m²/g to 400 m²/g, for example, 150 m²/g, 200 m²/g, 250 m²/g, 300 m²/g, 350 m²/g, or 400 m²/g, etc. It may be understood that a larger specific surface area is conducive to increasing the contact area between the fumed silica and the liquid silicone material, thereby facilitating the uniform dispersion of the fumed silica in the liquid silicone material.

Exemplarily, the fumed silica is a phenylsilane-treated hydrophobic fumed silica. Exemplarily, a method for preparing the phenylsilane-treated hydrophobic fumed silica is as follows:

The fumed silica is dried and added to a toluene solvent. After the mixture is stirred until uniform, a diphenylsilane modifier is added, followed by a catalyst, tris(pentachlorophenyl)borane, and the mixture is mechanically stirred for 15 min. The sample is then washed with anhydrous ethanol and filtered to remove the solvent. Finally, the sample is dried in a vacuum oven at 60°C to obtain the phenylsilane-treated hydrophobic fumed silica.

It should be noted that by treating the fumed silica with phenylsilane, the compatibility of the fumed silica with the liquid silicone resin system may be improved, thereby improving the dispersion uniformity of the fumed silica in the component A and the component B.

It can be understood that the role of the catalyst in the component A is to promote the cross-linking reaction of the high-viscosity vinyl silicone resin, the low-viscosity vinyl silicone resin, the phenyl vinyl silicone oil, and the hydrogen-containing silicone oil to form a network-structured silicone rubber.

Exemplarily, the catalyst in the component A is a platinum catalyst, and the platinum catalyst includes one or more of a platinum-vinylsiloxane complex, chloroplatinic acid, and a platinum-alkynyl complex.

It can be understood that the inhibitor in the component B is used to control the speed of the cross-linking reaction initiated by the catalyst. The inhibitor may react with the catalyst to form a complex. When the temperature of the reaction system reaches the curing temperature, the complex decomposes to release platinum, thereby initiating the cross-linking reaction.

Exemplarily, the inhibitor in the component B includes at least one of 3-methyl-1-butyn-3-ol, 1-ethynylcyclohexanol, tetravinylcyclotetrasiloxane, 2-methyl-3-butyn-2-ol, and 3,5-dimethyl-1-hexyn-3-ol.

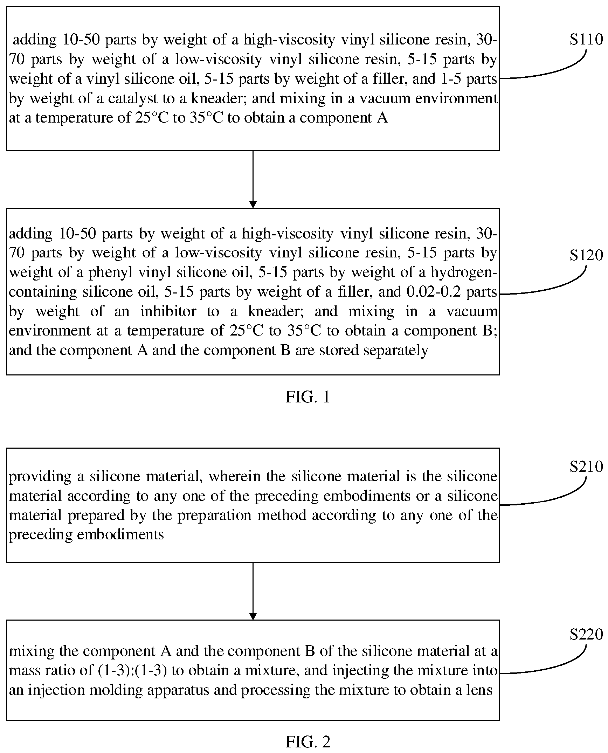

Referring to FIG. 1, an embodiment of the present application further provides a method for preparing a silicone material, including:
S110, adding 10-50 parts by weight of a high-viscosity vinyl silicone resin, 30-70 parts by weight of a low-viscosity vinyl silicone resin, 5-15 parts by weight of a vinyl silicone oil, 5-15 parts by weight of a filler, and 1-5 parts by weight of a catalyst to a kneader; and mixing in a vacuum environment at a temperature of 25°C to 35°C to obtain a component A;
S120, adding 10-50 parts by weight of a high-viscosity vinyl silicone resin, 30-70 parts by weight of a low-viscosity vinyl silicone resin, 5-15 parts by weight of a phenyl vinyl silicone oil, 5-15 parts by weight of a hydrogen-containing silicone oil, 5-15 parts by weight of a filler, and 0.02-0.2 parts by weight of an inhibitor to a kneader; and mixing in a vacuum environment at a temperature of 25°C to 35°C to obtain a component B; and the component A and the component B are stored separately.

Exemplarily, the vacuum level of the vacuum environment may range from - 0.08 MPa to -0.04 MPa, for example, -0.08 MPa, -0.07 MPa, -0.06 MPa, -0.05 MPa, or -0.04 MPa, etc.

It should be noted that, in the process of preparing the component A and the component B, the reason for selecting an environment of 25°C to 35°C is that the material temperature may rise during the kneading process. If the material temperature rises excessively, a small amount of the liquid silicone material may cross-link to form small particles, which reduces product quality. Therefore, controlling the ambient temperature to 25°C to 35°C may control the heating rate and final temperature of the material during the kneading process, thereby preventing the formation of small particles due to material cross-linking during kneading.

In addition, it should be noted that, in the process of preparing the component A and the component B, the reason for selecting a vacuum environment is that the materials of both the component A and the component B have a high viscosity. If a large amount of air is present in the environment, air bubbles may be mixed into the liquid silicone material during the kneading process, which will lead to defects in lenses prepared from this silicone material.

An embodiment of the present application further provides a lens. The lens is made of a silicone material, and the silicone material is the silicone material according to any one of the preceding embodiments or a silicone material prepared by the preparation method according to any one of the preceding embodiments.

Exemplarily, a refractive index of the lens of the embodiment of the present application ranges from 1.4 to 1.6, for example, 1.40, 1.42, 1.45, 1.48, 1.50, 1.52, 1.55, 1.58, or 1.60, etc. In some embodiments, the refractive index of the lens is 1.45.

Referring to FIG. 2, an embodiment of the present application further provides a method for manufacturing a lens, including:
S210, providing a silicone material, wherein the silicone material is the silicone material according to any one of the preceding embodiments or a silicone material prepared by the preparation method according to any one of the preceding embodiments;
S220, mixing the component A and the component B of the silicone material at a mass ratio of (1-3):(1-3) to obtain a mixture, and injecting the mixture into an injection molding apparatus and processing the mixture to obtain a lens.

Exemplarily, the component A and the component B of the silicone material are mixed at a mass ratio of 1:1, 1:2, 1:3, 2:1, or 3:1, etc.

Exemplarily, a temperature of the mold in the injection molding apparatus ranges from 120°C to 160°C, so that the silicone material cross-links and cures to form a molded part. It should be noted that when the mold temperature is lower than 120°C, the catalyst is ineffective, and when the mold temperature is higher than 160°C, the tear strength of the silicone deteriorates, making it difficult to demold the sheet in one piece.

Exemplarily, the step of "injecting the mixture into an injection molding apparatus" includes the stages of filling, pressure holding, curing, cooling, and demolding. A duration of the cooling stage ranges from 30 seconds to 60 seconds.

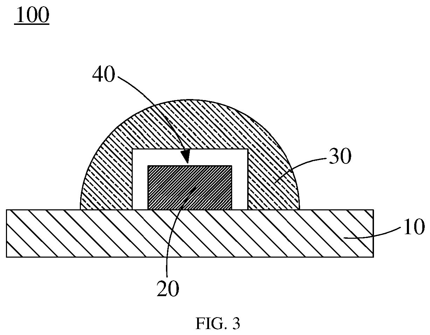

Referring to FIG. 3, an embodiment of the present application further provides a light source 100, including a substrate 10, a light-emitting device 20, and a lens 30. The light-emitting device 20 is connected to the substrate 10, the lens 30 is disposed peripherally of the light-emitting device 20, and the lens 30 is connected to the substrate 10. The lens 30 is the lens according to any one of the preceding embodiments or a lens manufactured by the method according to any one of the preceding embodiments.

Exemplarily, the light-emitting device 20 may be a Mini-LED or a Micro-LED.

Exemplarily, the substrate 10 is a Printed Circuit Board (PCB), or the substrate 10 is a thin-film transistor array substrate, that is, the substrate 10 includes thin-film transistors for controlling the turning on or off of the substrate 10.

Exemplarily, the lens 30 may be connected to the substrate 10 via an adhesive layer, and the light-emitting device 20 may be connected to pads on the substrate 10 by welding.

In some embodiments, the gap space 40 between the lens 30 and the light-emitting device 20 may be filled with an adhesive, so that the lens 30 is connected to the light-emitting device 20, improving the structural stability of the light source 100. Furthermore, the adhesive may block the corrosion of the light-emitting device 20 by external water and oxygen.

In other embodiments, the lens 30 is hermetically connected to the substrate 10, and the gap space 40 between the lens 30 and the light-emitting device 20 may be maintained in a vacuum state (for example, a vacuum level below 500 Pa), thereby using the vacuum environment (lack of water and oxygen) to protect the light-emitting device 20 and to block the corrosion of the light-emitting device 20 by external water and oxygen.

In still other embodiments, the lens 30 is hermetically connected to the substrate 10, and the gap space 40 between the lens 30 and the light-emitting device 20 may be filled with a protective gas (such as nitrogen or an inert gas), thereby using the protective gas to protect the light-emitting device 20 and to block the corrosion of the light-emitting device 20 by external water and oxygen.

An embodiment of the present application further provides a backlight module including the light source according to any one of the preceding embodiments.

Exemplarily, the backlight module may be a direct-lit backlight module or an edge-lit backlight module.

Hereinafter, the silicone material and the preparation method therefor, the lens and the manufacturing method therefor provided by the present application are described in detail with reference to specific examples.

### Example 1

A method for preparing a silicone lens, including:
adding 30 parts by weight of high-viscosity vinyl silicone resin (viscosity: 66000 mPa·s), 50 parts by weight of low-viscosity vinyl silicone resin (viscosity: 2600 mPa·s), 10 parts by weight of vinyl silicone oil, 10 parts by weight of phenylsilane-treated hydrophobic fumed silica, and 3 parts by weight of catalyst (chloroplatinic acid) to a kneader and kneading under a vacuum of -0.06 MPa and at a temperature of 30°C to obtain a component A; the component A was then filtered and dispensed into designated containers;
adding 30 parts by weight of high-viscosity vinyl silicone resin (viscosity: 66000 mPa·s), 50 parts by weight of low-viscosity vinyl silicone resin (viscosity: 2600 mPa·s), 10 parts by weight of phenyl vinyl silicone oil, 10 parts by weight of hydrogen-containing silicone oil, 10 parts by weight of phenylsilane-treated hydrophobic fumed silica, and 0.1 parts by weight of inhibitor (1-ethynylcyclohexanol) to a kneader and kneading under a vacuum of -0.06 MPa and at a temperature of 30°C to obtain a component B; the component B was then filtered, degassed, and dispensed into designated containers;
metering the component A and the component B with a silicone metering pump, mixing them uniformly at a mass ratio of 1:1, and feeding the mixture into a liquid silicone injection molding machine for injection molding, where a silicone sheet containing silicone lenses was formed through injection, pressure holding, curing, cooling, and demolding; the mold temperature of the injection molding machine was controlled at 140°C, and the cooling time was controlled at 45 seconds;
cutting and baking (post-curing) the resulting silicone sheet to obtain the silicone lenses.

### Example 2

A method for preparing a silicone lens, including:
adding 10 parts by weight of high-viscosity vinyl silicone resin (viscosity: 12000 mPa·s), 30 parts by weight of low-viscosity vinyl silicone resin (viscosity: 300 mPa·s), 5 parts by weight of vinyl silicone oil, 10 parts by weight of phenylsilane-treated hydrophobic fumed silica, and 1 part of catalyst (platinum-alkynyl complex) to a kneader and kneading under a vacuum of -0.08 MPa and at a temperature of 25°C to obtain a component A; the component A was then filtered and dispensed into designated containers;
adding 10 parts by weight of high-viscosity vinyl silicone resin (viscosity: 12000 mPa·s), 30 parts by weight of low-viscosity vinyl silicone resin (viscosity: 300 mPa·s), 10 parts by weight of phenyl vinyl silicone oil, 5 parts by weight of hydrogen-containing silicone oil, 10 parts by weight of phenylsilane-treated hydrophobic fumed silica, and 0.02 parts by weight of inhibitor (3-methyl-1-butyn-3-ol) to a kneader and kneading under a vacuum of -0.08 MPa and at a temperature of 25°C to obtain a component B; the component B was then filtered, degassed, and dispensed into designated containers;
metering the component A and the component B with a silicone metering pump, mixing them uniformly at a mass ratio of 1:1, and feeding the mixture into a liquid silicone injection molding machine for injection molding, where a silicone sheet containing silicone lenses was formed through injection, pressure holding, curing, cooling, and demolding; the mold temperature of the injection molding machine was controlled at 120°C, and the cooling time was controlled at 30 seconds;
cutting and baking (post-curing) the resulting silicone sheet to obtain the silicone lenses.

### Example 3

A method for preparing a silicone lens, including:
adding 50 parts by weight of high-viscosity vinyl silicone resin (viscosity: 120000 mPa·s), 70 parts by weight of low-viscosity vinyl silicone resin (viscosity: 5000 mPa·s), 15 parts by weight of vinyl silicone oil, 10 parts by weight of phenylsilane-treated hydrophobic fumed silica, and 5 parts by weight of catalyst (platinum-vinylsiloxane complex) to a kneader and kneading under a vacuum of -0.04 MPa and at a temperature of 35°C to obtain a component A; the component A was then filtered and dispensed into designated containers;
adding 50 parts by weight of high-viscosity vinyl silicone resin (viscosity: 120000 mPa·s), 70 parts by weight of low-viscosity vinyl silicone resin (viscosity: 5000 mPa·s), 10 parts by weight of phenyl vinyl silicone oil, 15 parts by weight of hydrogen-containing silicone oil, 10 parts by weight of phenylsilane-treated hydrophobic fumed silica, and 0.2 parts by weight of inhibitor (tetravinylcyclotetrasiloxane) to a kneader and kneading under a vacuum of -0.04 MPa and at a temperature of 35°C to obtain a component B; the component B was then filtered, degassed, and dispensed into designated containers;
metering the component A and the component B with a silicone metering pump, mixing them uniformly at a mass ratio of 1:1, and feeding the mixture into a liquid silicone injection molding machine for injection molding, where a silicone sheet containing silicone lenses was formed through injection, pressure holding, curing, cooling, and demolding; the mold temperature of the injection molding machine was controlled at 160°C, and the cooling time was controlled at 60 seconds;
cutting and baking (post-curing) the resulting silicone sheet to obtain the silicone lenses.

### Example 4

A method for preparing a silicone lens, which is the same as in Example 1, except that: the amount of the hydrophobic fumed silica in the component A was changed to 5 parts by weight, the amount of the hydrophobic fumed silica in the component B was changed to 5 parts by weight, and the amount of the phenyl vinyl silicone oil in the component B was changed to 5 parts by weight. Other raw material proportions and preparation processes remain unchanged.

### Example 5

A method for preparing a silicone lens, which is the same as in Example 1, except that: the amount of the hydrophobic fumed silica in the component A was changed to 15 parts by weight, the amount of the hydrophobic fumed silica in the component B was changed to 15 parts by weight, and the amount of the phenyl vinyl silicone oil in the component B was changed to 15 parts by weight. Other raw material proportions and preparation processes remain unchanged.

### Comparative Example 1

A method for preparing a silicone lens, including:
providing a commercially available high-transparency liquid silicone material;
feeding the commercially available high-transparency liquid silicone material into a liquid silicone injection molding machine for injection molding, where a silicone sheet containing silicone lenses was formed through injection, pressure holding, curing, cooling, and demolding; the mold temperature of the injection molding machine was controlled at 140°C, and the cooling time was controlled at 45 seconds;
cutting and baking (post-curing) the resulting silicone sheet to obtain the silicone lenses.

### Comparative Example 2

A method for preparing a silicone lens, including:
adding 80 parts by weight of high-viscosity vinyl silicone resin (viscosity: 66000 mPa·s) and 3 parts by weight of catalyst (chloroplatinic acid) to a kneader and kneading under a vacuum of -0.06 MPa and at a temperature of 30°C to obtain a component A; the component A was then filtered and dispensed into designated containers;
adding 80 parts by weight of high-viscosity vinyl silicone resin (viscosity: 66000 mPa·s) and 0.1 parts by weight of inhibitor (1-ethynylcyclohexanol) to a kneader and kneading under a vacuum of -0.06 MPa and at a temperature of 30°C to obtain a component B; the component B was then filtered, degassed, and dispensed into designated containers;
metering the component A and the component B with a silicone metering pump, mixing them uniformly at a mass ratio of 1:1, and feeding the mixture into a liquid silicone injection molding machine for injection molding, where a silicone sheet containing silicone lenses was formed through injection, pressure holding, curing, cooling, and demolding; the mold temperature of the injection molding machine was controlled at 140°C, and the cooling time was controlled at 45 seconds;
cutting and baking (post-curing) the resulting silicone sheet to obtain the silicone lenses.

### Comparative Example 3

A method for preparing a silicone lens, including:
adding 80 parts by weight of low-viscosity vinyl silicone resin (viscosity: 2600 mPa·s) and 3 parts by weight of catalyst (chloroplatinic acid) to a kneader and kneading under a vacuum of -0.06 MPa and at a temperature of 30°C to obtain a component A; the component A was then filtered and dispensed into designated containers;
adding 80 parts by weight of low-viscosity vinyl silicone resin (viscosity: 2600 mPa·s) and 0.1 parts by weight of inhibitor (1-ethynylcyclohexanol) to a kneader and kneading under a vacuum of -0.06 MPa and at a temperature of 30°C to obtain a component B; the component B was then filtered, degassed, and dispensed into designated containers;
metering the component A and the component B with a silicone metering pump, mixing them uniformly at a mass ratio of 1:1, and feeding the mixture into a liquid silicone injection molding machine for injection molding, where a silicone sheet containing silicone lenses was formed through injection, pressure holding, curing, cooling, and demolding; the mold temperature of the injection molding machine was controlled at 140°C, and the cooling time was controlled at 45 seconds;
cutting and baking (post-curing) the resulting silicone sheet to obtain the silicone lenses.

### Comparative Example 4

A method for preparing a silicone lens, which is the same as in Example 1, except that: the amounts of the hydrophobic fumed silica in the component A, the hydrophobic fumed silica in the component B, and the phenyl vinyl silicone oil in the component B were all changed to 0. Other raw material proportions and preparation processes remain unchanged.

### Comparative Example 5

A method for preparing a silicone lens, which is the same as in Example 1, except that: the amount of the hydrophobic fumed silica in the component A was changed to 20 parts by weight, the amount of the hydrophobic fumed silica in the component B was changed to 20 parts by weight, and the amount of the phenyl vinyl silicone oil in the component B was changed to 20 parts by weight. Other raw material proportions and preparation processes remain unchanged.

The performance of the silicone lenses prepared in Examples 1-5 and Comparative Examples 1-5 were tested, and the test methods are as follows:
Density was tested according to the ISO 1183 standard. Hardness was tested according to GB/T 6783-1994 "Food Additive Gelatin". Volume shrinkage was tested according to GB/T 24148.9-2014 "Plastics - Unsaturated-polyester resins (UP-R) - Part 9: Determination of total volume shrinkage". Visible light transmittance was tested according to ASTM D1003-61 "Standard Test Method for Haze and Luminous Transmittance of Transparent Plastics". Refractive index was tested using an Abbe refractometer. Tensile strength and elongation at break were tested according to the ISO 37 standard. Tear strength was tested according to the ASTM D624 standard. The demolding yield of the silicone lenses is the ratio of the number of completely shaped silicone lenses after demolding to the total number of silicone lenses after demolding, where the total number of silicone lenses after demolding is the sum of the number of completely shaped silicone lenses and the number of torn or damaged silicone lenses.

The test results are shown in Table 1 and Table2. Table 1 shows the results for Examples 1-3 and Comparative Examples 1-3, and Table 2 shows the results for Example 1, Examples 4-5, and Comparative Examples 4-5.

**Table 1**

| Test Item | Example 1 | Example 2 | Example 3 | Comparative Example 1 | Comparative Example 2 | Comparative Example 3 |
|---|---|---|---|---|---|---|
| Density(g/cm³) | 0.98 | 0.97 | 0.98 | 0.99 | 0.97 | 0.96 |
| Hardness(Shore A) | 75 | 77 | 79 | 68 | 72 | 65 |
| Volume Shrinkage (%) | 0.23 | 0.22 | 0.22 | 0.26 | 0.21 | 0.31 |
| Transmittance (%) | 94% | 94% | 94% | 94% | 94% | 94% |
| Tensile Strength(MPa) | 7.53 | 7.75 | 8.21 | 6.73 | 8.52 | 6.46 |
| Elongation at Break (%) | 467 | 423 | 389 | 560 | 203 | 578 |
| Refractive Index | 1.42 | 1.42 | 1.42 | 1.42 | 1.42 | 1.42 |
| Tear Strength(N/mm) | 22.18 | 20.32 | 19.75 | 9.73 | 13.2 | 15.3 |
| Demolding Yield (%) | 99.4 | 93.2 | 91.5 | 15 | 67 | 78 |

**Table 2**

| Test Item | Example 1 | Example 4 | Example 5 | Comparative Example 4 | Comparative Example 5 |
|---|---|---|---|---|---|
| Density(g/cm³) | 0.98 | 0.97 | 0.99 | 0.95 | 0.99 |
| Hardness(Shore A) | 75 | 70 | 77 | 67 | 82 |
| Volume Shrinkage (%) | 0.23 | 0.24 | 0.21 | 0.26 | 0.20 |
| Transmittance (%) | 94% | 94% | 92% | 94% | 88% |
| Tensile Strength(MPa) | 7.53 | 7.13 | 8.01 | 5.87 | 9.12 |
| Elongation at Break (%) | 467 | 498 | 406 | 579 | 321 |
| Refractive Index | 1.42 | 1.41 | 1.43 | 1.40 | - |
| Tear Strength(N/mm) | 22.18 | 19.75 | 21.12 | 12.47 | 17.63 |
| Demolding Yield (%) | 99.4 | 91.5 | 94.3 | 82.3 | 89.2 |

As shown in Table 1:
Compared to the silicone lenses of Comparative Examples 1-3, the silicone lenses prepared from the high-transmittance silicone material of Examples 1-3 of the present application show significant improvements in properties such as hardness and tear strength, thereby meeting the lens requirements for current Mini-LED television backlight module solutions. Furthermore, the demolding yields for the silicone lenses of Examples 1-3 are all above 90%, far exceeding those of Comparative Examples 1-3. This indicates that the silicone lens material of Examples 1-3 has high tear resistance, making it less prone to tearing and damage during demolding, thereby improving the production yield. Concurrently, the high hardness and low volume shrinkage of the silicone lenses prepared in Examples 1-3 effectively ensure the visual effect stability of the Mini-LED television backlight module solution.

As shown in Table 2, the contents of fumed silica and phenyl vinyl silicone oil significantly impact the demolding yield of the silicone lenses.

In the silicone lenses of Example 1 and Examples 4-5, where the content of fumed silica is between 5 and 15 parts by weight and the content of phenyl vinyl silicone oil is between 5 and 15 parts by weight, the lenses exhibit high hardness and tear strength. This greatly improves the demolding yield and meets the lens requirements for current Mini-LED television backlight module solutions.

In the silicone lens of Comparative Example 4, no fumed silica or phenyl vinyl silicone oil was added, resulting in insufficient hardness and low tear strength, which in turn led to a low demolding yield.

In the silicone lens of Comparative Example 5, the contents of both fumed silica and phenyl vinyl silicone oil were too high (exceeding 15 parts by weight). Because the fumed silica and phenyl vinyl silicone oil were difficult to disperse uniformly, the light transmittance of the silicone lens was low, failing to meet the visual effect requirements for lenses in current Mini-LED television backlight module solutions.

The foregoing provides a detailed description of the silicone material and preparation method therefor, the lens and manufacturing method therefor, the light source, and the backlight module provided by the embodiments of the present application. Specific examples have been used herein to illustrate the principles and embodiments of the present application, and the descriptions of the above embodiments are merely for the purpose of facilitating understanding of the present application. Furthermore, for a person skilled in the art, modifications may be made to the specific embodiments and application scope based on the concepts of the present application. In summary, the content of this specification should not be construed as a limitation on the present application.

## Claims

1. A silicone material, comprising:
a component A and a component B;
wherein the component A comprises 10-50 parts by weight of a high-viscosity vinyl silicone resin, 30-70 parts by weight of a low-viscosity vinyl silicone resin, 5-15 parts by weight of a vinyl silicone oil, 5-15 parts by weight of a filler, and 1-5 parts by weight of a catalyst;
wherein the component B comprises 10-50 parts by weight of a high-viscosity vinyl silicone resin, 30-70 parts by weight of a low-viscosity vinyl silicone resin, 5-15 parts by weight of a phenyl vinyl silicone oil, 5-15 parts by weight of a hydrogen-containing silicone oil, 5-15 parts by weight of a filler, and 0.02-0.2 parts by weight of an inhibitor;
wherein a viscosity of the high-viscosity vinyl silicone resin ranges from 12000 mPa·s to 120000 mPa·s, and a viscosity of the low-viscosity vinyl silicone resin ranges from 300 mPa·s to 5000 mPa·s.

2. The silicone material according to claim 1, wherein the high-viscosity vinyl silicone resin and the low-viscosity vinyl silicone resin are both a methyl vinyl MQ silicone resin; and
a vinyl content of the high-viscosity vinyl silicone resin ranges from 0.5 wt% to 2.0 wt%, and a vinyl content of the low-viscosity vinyl silicone resin ranges from 0.5 wt% to 2.0 wt%.

3. The silicone material according to claim 1, wherein the vinyl silicone oil is a linear polysiloxane terminated with (CH₃)₂(CH₂=CH)SiO_{1/2}, a vinyl content of the vinyl silicone oil ranges from 0.5 wt% to 2.0 wt%, and a viscosity of the vinyl silicone oil ranges from 8000 mPa·s to 20000 mPa·s.

4. The silicone material according to claim 1, wherein the phenyl vinyl silicone oil is a vinyl-terminated methyl phenyl silicone oil;
a viscosity of the phenyl vinyl silicone oil ranges from 100 mPa·s to 5000 mPa·s;
a vinyl content of the phenyl vinyl silicone oil ranges from 0.3 wt% to 2.0 wt%; and
a refractive index of the phenyl vinyl silicone oil ranges from 1.45 to 1.55.

5. The silicone material according to claim 4, wherein the viscosity of the phenyl vinyl silicone oil ranges from 2000 mPa·s to 5000 mPa·s; and
the refractive index of the phenyl vinyl silicone oil ranges from 1.48 to 1.54.

6. The silicone material according to claim 1, wherein the hydrogen-containing silicone oil is a polysiloxane with a terminal and side hydrogen structure, and a hydrogen content of the polysiloxane with a terminal and side hydrogen structure ranges from 0.25 wt% to 1.3 wt%.

7. The silicone material according to claim 1, wherein the filler is fumed silica, and a specific surface area of the fumed silica ranges from 150 m²/g to 400 m²/g.

8. The silicone material according to claim 7, wherein the fumed silica is a phenylsilane-treated hydrophobic fumed silica.

9. The silicone material according to any one of claims 1-7, wherein the catalyst in the component A is a platinum catalyst, and the platinum catalyst comprises one or more of a platinum-vinylsiloxane complex, chloroplatinic acid, and a platinum-alkynyl complex; and
the inhibitor in the component B comprises at least one of 3-methyl-1-butyn-3-ol, 1-ethynylcyclohexanol, tetravinylcyclotetrasiloxane, 2-methyl-3-butyn-2-ol, and 3,5-dimethyl-1-hexyn-3-ol.

10. A method for preparing a silicone material, comprising:
adding 10-50 parts by weight of a high-viscosity vinyl silicone resin, 30-70 parts by weight of a low-viscosity vinyl silicone resin, 5-15 parts by weight of a vinyl silicone oil, 5-15 parts by weight of a filler, and 1-5 parts by weight of a catalyst to a kneader; and mixing in a vacuum environment at a temperature of 25°C to 35°C to obtain a component A; and
adding 10-50 parts by weight of a high-viscosity vinyl silicone resin, 30-70 parts by weight of a low-viscosity vinyl silicone resin, 5-15 parts by weight of a phenyl vinyl silicone oil, 5-15 parts by weight of a hydrogen-containing silicone oil, 5-15 parts by weight of a filler, and 0.02-0.2 parts by weight of an inhibitor to a kneader; and mixing in a vacuum environment at a temperature of 25°C to 35°C to obtain a component B;
wherein the component A and the component B are stored separately.

11. The method for preparing a silicone material according to claim 10, wherein the high-viscosity vinyl silicone resin and the low-viscosity vinyl silicone resin are both a methyl vinyl MQ silicone resin; and
a vinyl content of the high-viscosity vinyl silicone resin ranges from 0.5 wt% to 2.0 wt%, and a vinyl content of the low-viscosity vinyl silicone resin ranges from 0.5 wt% to 2.0 wt%.

12. The method for preparing a silicone material according to claim 10, wherein the vinyl silicone oil is a linear polysiloxane terminated with (CH₃)₂(CH₂=CH)SiO_{1/2}, a vinyl content of the vinyl silicone oil ranges from 0.5 wt% to 2.0 wt%, and a viscosity of the vinyl silicone oil ranges from 8000 mPa·s to 20000 mPa·s.

13. The method for preparing a silicone material according to claim 10, wherein the phenyl vinyl silicone oil is a vinyl-terminated methyl phenyl silicone oil;
a viscosity of the phenyl vinyl silicone oil ranges from 100 mPa·s to 5000 mPa·s;
a vinyl content of the phenyl vinyl silicone oil ranges from 0.3 wt% to 2.0 wt%; and
a refractive index of the phenyl vinyl silicone oil ranges from 1.45 to 1.55.

14. The method for preparing a silicone material according to claim 13, wherein the viscosity of the phenyl vinyl silicone oil ranges from 2000 mPa·s to 5000 mPa·s; and
the refractive index of the phenyl vinyl silicone oil ranges from 1.48 to 1.54.

15. The method for preparing a silicone material according to claim 10, wherein the hydrogen-containing silicone oil is a polysiloxane with a terminal and side hydrogen structure, and a hydrogen content of the polysiloxane with a terminal and side hydrogen structure ranges from 0.25 wt% to 1.3 wt%.

16. The method for preparing a silicone material according to claim 10, wherein the filler is fumed silica, and a specific surface area of the fumed silica ranges from 150 m²/g to 400 m²/g.

17. A lens, wherein the lens is made of a silicone material, and the silicone material is the silicone material according to any one of claims 1-9 or a silicone material prepared by the method according to any one of claims 10-16.

18. A method for manufacturing a lens, comprising:
providing a silicone material, wherein the silicone material is the silicone material according to any one of claims 1-9 or a silicone material prepared by the method according to any one of claims 10-16; and
mixing the component A and the component B in the silicone material at a mass ratio of (1-3):(1-3) to obtain a mixture, and injecting the mixture into an injection molding apparatus and processing the mixture to obtain a lens.

19. A light source, comprising:
a substrate;
a light-emitting device connected to the substrate; and
a lens;
wherein the lens is disposed peripherally of the light-emitting device and connected to the substrate, and the lens is the lens according to claim 17 or a lens manufactured by the method according to claim 18.

20. A backlight module, comprising the light source according to claim 19.
